# EUROPÄISCHE PATENTANMELDUNG

(11) **EP 0 734 144 A2**
(43) Veröffentlichungstag der Anmeldung: **25.09.1996**
(21) Anmeldenummer: 96103348.7
(22) Anmeldetag: 04.03.1996
(51) Int. Cl.: H04M 15/28, H04M 15/00

(54) **Verfahren und Anordnung zum Ermitteln der Benutzergebühr in einer Teilnehmereinrichtung**

(30) Priorität: 20.03.1995 DE 19510037
(71) Anmelder: SIEMENS AKTIENGESELLSCHAFT, 80333 München (DE)
(72) Erfinder: Sextl, Helmut, Dipl.-Ing., 84489 Burghausen (DE)

(57) **Zusammenfassung**

Zum Ermitteln der Benutzergebühr in einer Teilnehmereinrichtung, die mit einem Telekommunikationsnetz verbunden ist und die eine Steuereinheit (ST) und eine Speichereinrichtung (SP) enthält und zu der von einer Zentralstelle (SSS) Gebührendaten (P) übertragen werden, werden in der Speichereinrichtung (SP) dem Teilnehmer zugeordnete Tarifdaten (Z) und die von der Zentralstelle (SSS) übertragenen Gebührendaten (P) eingespeichert. Die Steuereinheit (ST) ermittelt aus Tarifdaten (Z), die unter Verwendung der gewählten Nummer eines fernen Teilnehmers aus der Speichereinrichtung (SP) auslesbar sind und aus entsprechenden Gebührendaten (P) die Benutzergebühr.

## Beschreibung

Die Erfindung bezieht sich auf ein Verfahren zum Ermitteln der Benutzergebühr in einer Teilnehmereinrichtung gemäß dem Oberbegriff des Patentanspruchs 1. Weiterhin bezieht sich die Erfindung auf eine Anordnung zur Durchführung des Verfahrens.

Es ist bereits allgemein bekannt, an Teilnehmerendeinrichtungen, die mit einem Telekommunikationsnetz, beispielsweise dem öffentlichen Fernsprechnetz oder dem öffentlichen Mobilfunknetz, angeschlossen sind, die jeweilige Benutzergebühr anzuzeigen. Hierzu werden im öffentlichen Fernsprechnetz Gebührenimpulse übertragen, mittels denen in der Teilnehmereinrichtung die jeweilige Benutzergebühr, beispielsweise für ein Gespräch berechnet wird. Die berechnete Benutzergebühr wird dann an einer Anzeigeeinheit der Teilnehmerendeinrichtung angezeigt. Der Benutzer kann sich auf diese Weise ein Bild über die angefallenen Kosten für die Benutzung der Teilnehmerendeinrichtung machen, wobei selbstverständlich zu den Benutzergebühren in der Regel noch eine Grundgebühr hinzukommt.

Falls ein Telekommunikationsdienst von einem Diensteanbieter zur Verfügung gestellt wird, kann dieser unabhängig von den im Netz vorgesehenen Gebührendaten eine andere Tarifgestaltung durchführen.

Ein Beispiel für ein Telekommunikationsnetz ist das unter der Bezeichnung GSM (Global System of Mobile Communication) bekannte Mobilfunknetz. In diesem Mobilfunknetz wird ein unter der Bezeichnung "Advice of Charge" bekanntes Dienstemerkmal für die Berechnung der Gebühren verwendet. Von einer Zentralstelle wird abhängig von Parametern, wie beispielsweise der Nummer eines gewählten fernen Teilnehmers, der Art des Dienstes und der Kategorie ein sogenannter e-Parametersatz zur Teilnehmerstation, in diesem Fall zur Mobilstation, übertragen. Anhand dieses e-Parametersatzes errechnet die Mobilstation die anfallenden Benutzergebühren. In diesem e-Parametersatz sind Informationen wie das Gebührenintervall, die Einheiten pro Intervall und ein Umrechnungsfaktor abgelegt.

Wenn ein Diensteanbieter verschiedene Tarifmodelle den Teilnehmern anbietet, ist die Mobilstation unter Verwendung des e-Parametersatzes gegenwärtig nicht in der Lage, die tatsächlich anfallenden Benutzergebühren zu berechnen. Derartige Tarifmodelle sind beispielsweise eine hohe Grundgebühr und geringe Benutzergebühren pro Gespräch oder eine niedrige Grundgebühr und eine hohe Benutzergebühr pro Gespräch. Das erste Tarifmodell wird insbesondere dann verwendet, wenn die Anzahl der Gespräche sehr hoch ist, während sich das zweite Tarifmodell beispielsweise bei Privatkunden anbietet, die verhältnismäßig wenig telefonieren.

Es wäre denkbar, in den Zentralstellen des Mobilfunknetzes die speziellen Tarifmodelle der einzelnen Mobilfunkkunden zu berücksichtigen. Dies erfordert jedoch einen sehr hohen technischen Aufwand. Beispielsweise werden derzeit in Deutschland über 100 verschiedene Tarifmodelle angeboten. Das Merkmal "Advice of Charge" gibt somit nur für wenige Kunden die tatsächlich anfallenden Benutzergebühren wieder. Die Mobilstationen bieten zwar die Möglichkeit, abhängig von der Dauer eines Gesprächs mittels eines festen Faktors die Gebühr zu errechnen, jedoch ist diese Möglichkeit äußerst ungenau, da weder ein Unterschied zwischen Normal- und Billigtarif gemacht wird, noch ein Unterschied ob das Gespräch national oder international ist.

Der Erfindung liegt daher die Aufgabe zugrunde, ein Verfahren und eine Anordnung anzugeben, mittels denen in einer Teilnehmerendeinrichtung die tatsächlich anfallenden Benutzergebühren angezeigt werden können.

Erfindungsgemäß wird die Aufgabe bei dem Verfahren der eingangs genannten Art durch die im Patentanspruch 1 angegebenen Merkmale gelöst. Eine Anordnung und ein Endgerät zur Durchführung des Verfahrens sind im Patentanspruch 15 bzw. 16 angegeben. Weiterbildungen der Erfindung ergeben sich aus den Unteransprüchen.

Das Verfahren gemäß der Erfindung hat den Vorteil, daß die Ermittlung der Benutzergebühren nun unter Verwendung eines teilnehmerspezifischen Gebührenmodells möglich ist und deshalb der Teilnehmer über die tatsächlich anfallenden Benutzergebühren sofort informiert wird, was bis jetzt nicht möglich ist. Die teilnehmerspezifischen Gebührenmodelle können insbesondere auf einer Chipkarte gespeichert werden, so daß die Ermittlung unabhängig von der Teilnehmereinrichtung ist.

Das Verfahren und die Anordnung, sowie das Endgerät gemäß der Erfindung werden im folgenden anhand von Zeichnungen näher erläutert.

Es zeigen
- FIG 1: ein Blockbild eines bekannten Mobilfunksystems
- FIG 2: eine schematische Darstellung der Übertragung von Gebührendaten zu einer Teilnehmereinrichtung
- FIG 3: ein Blockbild einer Anordnung zur Durchführung des Verfahrens
- FIG 4: eine schematische Darstellung von aus Speichern auslesbaren Zonendaten und Gebührendaten

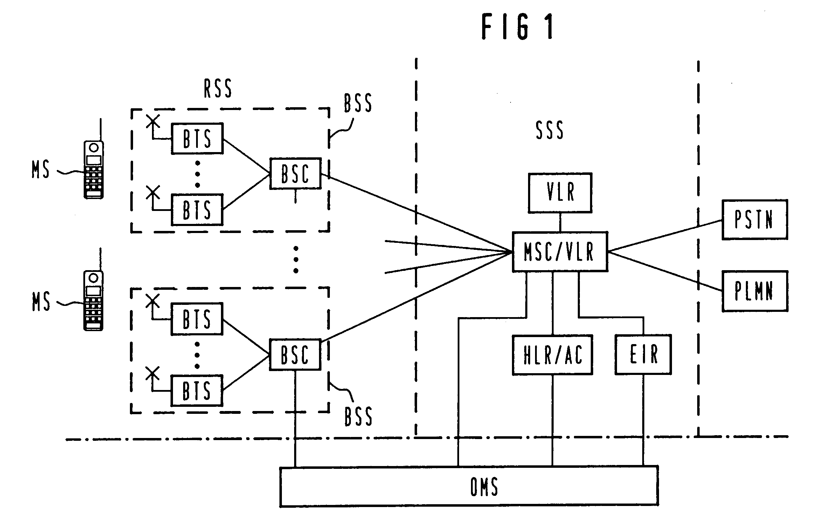

Das in FIG 1 dargestellte Telekommunikationsnetz ist als ein unter der Bezeichnung GSM (Global System of Mobile Communication) bekanntes Mobilfunknetz auf der Basis eines elektronischen Vermittlungssystems ausgebildet. Es enthält mehrere Systemeinheiten, nämlich ein Vermittlungssystem SSS, ein Funksystem RSS und ein Bedien- und Wartungssystem OMS. Das Vermittlungssystem SSS stellt die Verbindung zwischen dem Funksystem RSS und einem öffentlichen Telefonnetz PSTN, beispielsweise einem ISDN-Netz, oder mit einem anderen Mobilnetz PLMN her. Das Funksystem RSS wird eingeteilt in Basisstationen BSS und mehrere als Teilnehmereinrichtungen dienende Mobilstationen MS. Die Basisstationen BSS stellen alle Funktionen zur Verfügung, die erforderlich sind, um eine Funkdeckung von Zellen zu gewährleisten und die Mobilstationen MS stellen alle Funktionen für den Teilnehmer bereit. Jede Basisstation BSS umfaßt eine Basisstationssteuerung BSC, die alle Funktionen für die Funkübertragung durchführt, lokale Vorgänge bearbeitet und Wartungsfunktionen durchführt und eine oder mehrere Basisfunkstationen BTS. Ein derartiges System ist beispielsweise in einer Broschüre D900 Mobile Communication System SYD der Siemens AG beschrieben.

Das Vermittlungssystem SSS enthält neben einer Mobilvermittlungsstelle MSC eine mit dieser verbundene Heimatdatei HLR des Mobilfunkteilnehmers, eine Besucherdatei VLR und ein Geräteidentifizierungsregister EIR. Die Besucherdatei VLR speichert Informationen über diejenigen Mobilstationen MS, die sich gerade in der jeweiligen Besucherdateifläche befinden und die Heimatdatei HLR speichert alle die Mobilstation MS betreffenden Daten, die gegebenenfalls an eine Besucherdatei VLR weitergegeben werden.

Infolge der Mobilität des Mobilfunkteilnehmers muß das Mobilfunknetz PLMN immer über den gegenwärtigen Aufenthalt eines Mobilfunkteilnehmers informiert sein. Die Besucherdatei VLR beinhaltet alle Informationen über denjenigen Mobilfunkteilnehmer, die sich gerade in derjenigen Besucherdateifläche aufhalten, die sie überwacht. Um diese Informationen bereitzustellen, muß das Mobilfunknetz PLMN immer auf dem neuesten Stand des Aufenthalts eines jeden Mobilfunkteilnehmers bzw. der Mobilstation MS sein.

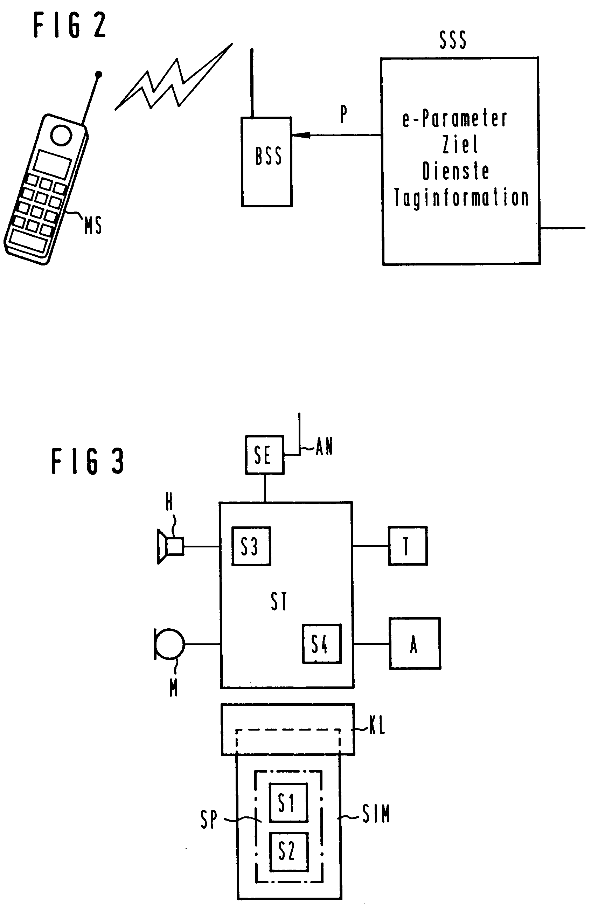

Bei dem bekannten Mobilfunksystem ist es üblich, zu einer Mobilstation einen sogenannten e-Parametersatz zu übertragen, um dort die Benutzergebühr zu ermitteln und anzuzeigen. Dieser e-Parametersatz wird, wie in FIG 2 dargestellt, in demjenigen Vermittlungssystem SSS erzeugt, in dessen Besucherregister VLR sich die Mobilstation MS eingebucht hat. Der e-Parametersatz ist abhängig von der gewählten Rufnummer eines fernen Teilnehmers, von den Dienstemerkmalen und von Zeitparametern, wie beispielsweise die Tageszeit oder den Wochentag. Die Dienstemerkmale geben beispielsweise an, ob die Sprache mit der vollen oder mit nur der halben Datenrate codiert wird. Unter Verwendung des zur Mobilstation MS übertragenen e-Parametersatzes ermittelt die Mobilstation MS die anfallenden Gebühren. In diesem e-Parametersatz sind Informationen wie Gebührenintervalle, Einheiten pro Intervall und Umrechnungsfaktoren abgelegt.

Da zwischen dem Betreiber des Mobilfunknetzes und dem Teilnehmer Diensteanbieter zwischengeschaltet sind, die in Zusammenarbeit mit dem Netzbetreiber den Teilnehmern bestimmte Dienste anbieten und da die Diensteanbieter den Teilnehmern unterschiedliche Tarifmodelle anbieten ist es gegenwärtig nicht möglich, unter Verwendung des e-Parametersatzes in der Mobilstation MS die tatsächlichen Benutzergebühren zu berechnen und anzuzeigen.

Bei der in FIG 3 dargestellten Mobilstation ist eine zentrale Steuereinheit ST vorgesehen, an der ein Hörer A, ein Mikrofon M, eine Tastatur T, eine Anzeigeeinheit A, ein Kartenleser KL und eine mit einer Antenne AN verbundene Sende-Empfangseinheit SE angeschlossen sind. Der Kartenleser KL steht in Wirkverbindung mit einer herausnehmbaren Chipkarte SIM, die zusätzlich zu den bei Mobilstationen üblichen Einheiten eine Speichereinrichtung SP enthält. Die Speichereinrichtung SP weist zwei Speicherbereiche S1 und S2 auf. Im ersten Speicherbereich S1 sind Tarifdaten gespeichert, die unter Verwendung einer gewählten Rufnummer eines fernen Teilnehmers und gegebenenfalls unter Verwendung von Standortdaten eine Zone des Tarifmodells auswählen. Im zweiten Speicherbereich S2 ist ein allgemeines Tarifmodell gespeichert, das dem e-Parametersatz entspricht. Dort sind in Abhängigkeit von den Tarifzonen Tarifparameter mit Umschaltezeitpunkten für die Werktage und das Wochenende gespeichert. Unter Verwendung der aus dem ersten Speicherbereich S1 ausgelesenen Zone des Tarifmodells wird in Abhängigkeit von Zeitparametern, wie der Tageszeit und dem Wochentag aus dem zweiten Speicherbereich S2 ein Parametersatz ausgelesen und unter Verwendung dieses Parametersatzes erfolgt in der Steuereinheit ST eine Berechnung der Benutzergebühr. Die Steuereinheit ST kann auch auf der Chipkarte SIM vorgesehen sein. Diese wird dann an der Anzeigeeinheit A gegebenenfalls dargestellt.

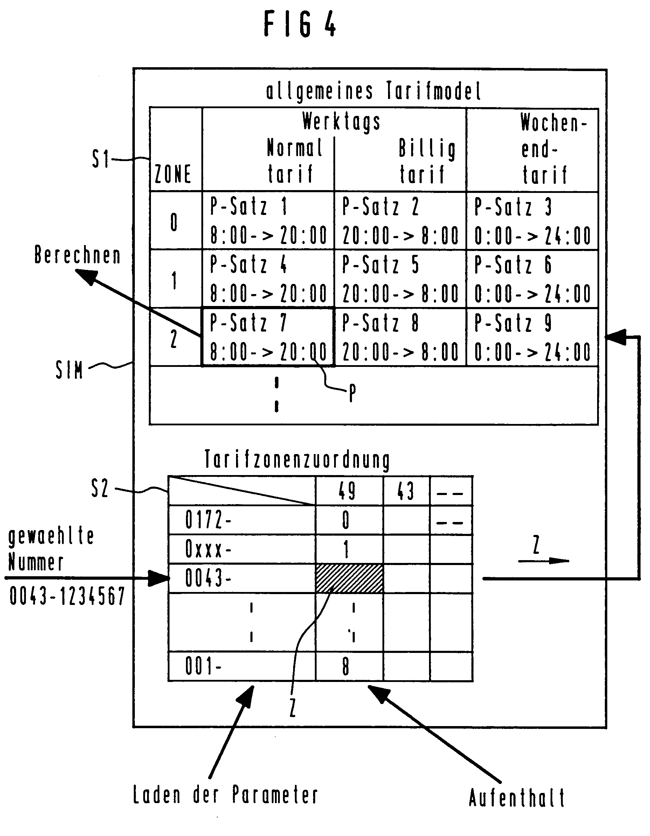

Falls beispielsweise, wie in FIG 4 dargestellt die gewählte Nummer 0043-1234567 beträgt, werden in Abhängigkeit von der Vorwahlnummer 0043 und von dem Standortparameter 49, der der Vorwahl von Deutschland entspricht, die der Zone 2 zugeordneten Tarifdaten ermittelt. Es wird dabei davon ausgegangen, daß sich die Mobilstation MS bei einem Vermittlungssystem VSS in Deutschland eingebucht hat und die Daten dieser Mobilstationen dem entsprechenden Besucherregister VLR gespeichert sind. Unter Verwendung der Zone 2 wird nun aus dem zweiten Speicherbereich als Gebührendaten P der Parametersatz 7 ausgewählt, wenn der Anruf zwischen 6 Uhr und 20 Uhr an einem Werktag erfolgt.

An der Anzeigeeinheit A können dann laufend die entsprechenden Benutzergebühren angezeigt werden. Die Steuereinheit ST kann auch eine weitere Speichereinrichtung S3 enthalten, in denen die Benutzergebühren einer Mehrzahl von Gesprächen oder auch die Gebührensumme über mehrere Gespräche hinweg speicherbar sind. Das Laden der teilnehmerspezifischen Gebühreninformationen kann durch den Diensteanbieter auf der Chipkarte SIM erfolgen. Wenn sich das Tarifmodell ändert, kann der Diensteanbieter die Chipkarte SIM austauschen oder diesem Teilnehmer speziell codierte Kurzmitteilungen über das Mobilfunknetz übertragen. Derartige Kurzmitteilungen sind unter der Bezeichnung Short Message Service allgemein bekannt. Unter Verwendung dieser Kurzmitteilungen können die Informationen in dem Speicherbereich SP abgeändert werden bzw. neu eingespeichert werden. Dabei enthalten die Kurzmitteilungen einen speziellen Nachrichtenkopf, welchen die Mobilstation als Nachricht zum Abändern bzw. Einspeichern des neuen Tarifmodells erkennt.

Die Zeitparameter, d.h. die Zeit und das Datum können entweder an der Mobilstation mittels der Tastatur T direkt in eine Speichereinheit S4 der Steuereinheit ST eingegeben werden oder durch andere Zeit-/Datumsquellen erfolgen. Als solche Quellen kann die Zeit-/Datumsinformation auf einem Signalisierungskanal auf der Luftschnittstelle zwischen der Mobilstation MS und der Basisstation BSS dienen oder diese Zeitparameter können durch einen sogenannten SMS Cell-Broadcastdienst and die Mobilstation MS verschickt werden. Der Vorteil dabei ist, daß sich der Teilnehmer bei einem Aufenthalt in einem anderen Land sich nicht um die aktuelle Landeszeit kümmern muß, da sich die Mobilstation MS automatisch auf die lokale Zeit aufsynchronisiert.

Die laufende Gebührensumme kann auf der Chipkarte SIM in einem für den Kunden nicht löschbaren Speicherplatz gehalten werden. Ein Löschen kann dann beispielsweise nur durch den Verleiher einer Mobilstation MS erfolgen. Eine Abfrage kann dagegen sowohl durch den Verleiher als auch durch den Teilnehmer erfolgen. Die Abfrage kann entweder durch ein Chipkartenlesegerät KL erfolgen oder durch das Senden einer speziellen Kurzmitteilung an den Teilnehmer, worauf die Mobilstation MS wieder um eine Kurzmitteilung mit der Gebührensumme an den Verleiher zurückschickt und gegebenenfalls die Gebührensumme auf der Chipkarte SIM löscht.

## Patentansprüche

1. Verfahren zum Ermitteln der Benutzergebühr in einer Teilnehmereinrichtung (MS), die mit einem Mobilfunknetz (GSM) verbunden ist und die eine Steuereinheit (ST) und eine Speichereinrichtung (SP) enthält, in der von einer Zentralstelle (SSS) übertragene Gebührendaten (P) gespeichert werden,
**dadurch gekennzeichnet,**
daß in der Speichereinrichtung (SP) in einem ersten Speicherbereich (S1) dem Teilnehmer zugeordnete Tarifdaten (Z) gespeichert werden, die unter Verwendung der gewählten Nummer eines fernen Teilnehmers und unter Verwendung von der Teilnehmereinrichtung (MS) zugeordneten Standortdaten ausgelesen werden, und in einem zweiten Speicherbereich (S2) die von der Zentralstelle (SSS) übertragenen Gebührendaten (P) gespeichert werden und daß mittels der Steuereinheit (ST) unter Verwendung der Tarifdaten (Z) und der entsprechenden Gebührendaten (P) die Benutzergebühr ermittelt wird.

2. Verfahren nach Anspruch 1,
**dadurch gekennzeichnet,**
daß als Speichereinrichtung (SP) eine aus der Teilnehmereinrichtung (MS) entnehmbare Speichereinrichtung verwendet wird.

3. Verfahren nach Anspruch 2,
**dadurch gekennzeichnet,**
daß als Speichereinrichtung (SP) eine Chipkarte (SIM) verwendet wird.

4. Verfahren nach einem der Ansprüche 1 bis 3,
**dadurch gekennzeichnet,**
daß die Benutzergebühr über einen längeren Zeitraum aufsummierbar ist und gespeichert wird.

5. Verfahren nach Anspruch 4,
**dadurch gekennzeichnet,**
daß die Benutzergebühr löschbar gespeichert wird.

6. Verfahren nach einem der Ansprüche 1 bis 5,
**dadurch gekennzeichnet,**
daß die Benutzergebühr an einer Anzeigeeinheit (A) der Teilnehmereinrichtung (MS) angezeigt wird.

7. Verfahren nach einem der Ansprüche 1 bis 6,
**dadurch gekennzeichnet,**
daß die Benutzergebühr über das Mobilfunknetz (GSM) übertragbar ist.

8. Verfahren nach einem der Ansprüche 1 bis 7,
**dadurch gekennzeichnet,**
daß die Benutzergebühr nach dem Empfang einer Aufforderung an die Teilnehmereinrichtung (MS) über das Mobilfunknetz (GSM) übertragen wird.

9. Verfahren nach Anspruch 7 oder 8,
**dadurch gekennzeichnet,**
daß die Übertragung der Benutzergebühr mittels des bei einem an sich bekannten Mobilfunksystem (GSM) bekannten Kurzmitteilungsdienstes des (SMS) erfolgt.

10. Verfahren nach einem der Ansprüche 1 bis 9,
**dadurch gekennzeichnet,**
daß die Gebührendaten (P) entsprechend dem bei einem an sich bekannten Mobilfunknetz (GSM) üblichen e-Parametersatz übertragen werden.

11. Verfahren nach einem der Ansprüche 1 bis 10,
**dadurch gekennzeichnet,**
daß Zeitparameter und/oder Standortparameter eingespeichert werden und mittels der Steuereinheit (ST) verarbeitet werden.

12. Anordnung zum Ermitteln der Benutzergebühr in einer Teilnehmereinrichtung, die mit einem Mobilfunknetz (GSM) verbunden ist und die eine Steuereinheit (ST) und eine Speichereinrichtung (SP) enthält, in der von einer Zentralstelle (SSS) übertragene Gebührendaten (P) speicherbar sind,
**dadurch gekennzeichnet,**
daß die Speichereinrichtung (SP) einen ersten Speicherbereich (S1) enthält, in dem dem Teilnehmer zugeordnete Tarifdaten (Z) speicherbar sind, die unter Verwendung der gewählten Nummer eines fernen Teilnehmers und unter Verwendung von der Teilnehmereinrichtung (MS) zugeordneten Standortdaten auslesbar sind, und einen zweiten Speicherbereich (S2) enthält, in dem die von der Zentralstelle (SSS) übertragenen Gebührendaten (P) einspeicherbar sind und daß die Steuereinheit (ST) aus den Tarifdaten (Z) und den entsprechenden Gebührendaten (P) die Benutzergebühr ermittelt.

13. Teilnehmereinrichtung, die mit einem Mobilfunknetz (GSM) verbunden ist und die eine Steuereinheit (ST) zum Ermitteln der Benutzergebühr und eine Speichereinrichtung (SP) enthält, in der von einer Zentralstelle (SSS) übertragene Gebührendaten (P) speicherbar sind,
**dadurch gekennzeichnet,**
daß die Speichereinrichtung (SP) einen ersten Speicherbereich (S1) enthält, in dem dem Teilnehmer zugeordnete Tarifdaten (Z) speicherbar sind, die unter Verwendung der gewählten Nummer eines fernen Teilnehmers und unter Verwendung von der Teilnehmereinrichtung (MS) zugeordneten Standortdaten auslesbar sind, und einen zweiten Speicherbereich (S2) enthält, in dem die von der Zentralstelle (SSS) übertragenen Gebührendaten (P) einspeicherbar sind und daß die Steuereinheit (ST) aus den Tarifdaten (Z) und den entsprechenden Gebührendaten (P) die Benutzergebühr ermittelt.

14. Teilnehmereinrichtung nach Anspruch 13,
**dadurch gekennzeichnet,**
daß sie als eine Mobilstation ausgebildet ist.
